# EUROPÄISCHE PATENTANMELDUNG

(11) **EP 4 693 598 A1**
(43) Veröffentlichungstag der Anmeldung: **11.02.2026**
(21) Anmeldenummer: 25184101.1
(22) Anmeldetag: 20.06.2025
(51) Int. Cl.: H01M 10/42, H01M 10/48

(54) **VORRICHTUNG UND VERFAHREN ZUM ERFASSEN EINES BERSTVERHALTENS EINER BATTERIEZELLE**

(30) Priorität: 05.08.2024 DE 102024207379
(71) Anmelder: PowerCo SE, 38239 Salzgitter (DE)
(72) Erfinder: Klingebiel, Fabian, 38114 Braunschweig (DE); Teuwsen, Jan, 38110 Braunschweig (DE)
(74) Vertreter: FDST Patentanwälte

(57) **Zusammenfassung**

Die vorgestellte Erfindung betrifft eine Vorrichtung (100) zum Erfassen eines Berstverhaltens einer Batteriezelle (101), wobei die Vorrichtung (100) umfasst:
- einen Indentor (103),
- eine Anzahl Sensoren (105),

wobei der Indentor (103) eine Kontaktfläche (107) umfasst, die dazu konfiguriert ist, die Batteriezelle (101) in einem Kontaktbereich (109) bis zum Bersten zu verformen,
wobei die Anzahl Sensoren (105) dazu konfiguriert ist, das Berstverhalten der Batteriezelle (101) in dem Kontaktbereich (109) zu erfassen.

## Beschreibung

Die vorgestellte Erfindung betrifft eine Vorrichtung und ein Verfahren zum Erfassen eines Berstverhaltens einer Batteriezelle, gemäß den beigefügten Ansprüchen.

Bei Batteriezelldeformationstests, wie bspw. sogenannten "Crushtests" oder "Crashtests", wird eine Berstscheibe bzw. ein sogenanntes "Vent" einer Batteriezelle durch einen Eindringkörper, einen sogenannten "Indentor", verformt. Das Vent, das eigentlich als Sollbruchstelle zur Regulierung des Innendrucks fungiert, wird dabei durch die Verformung durch den Indentor von außen bis zum Versagen bzw. Aufreißen beschädigt, sodass Elektrolyt aus der Batteriezelle ausdringt.

Bei einem Crushtest, bei dem mit einem bspw. kugelförmigen Indentor aus Stahl ein Vent eingedrückt wird, verdeckt der Indentor die Sicht auf das Vent, sodass nicht klar erkennbar ist, zu welchem Zeitpunkt des Crushtests, insbesondere bei welcher Intrusionstiefe und welcher Kraft und an welcher Stelle, die Batteriezelle zerberstet bzw. aufreißt. Diese Informationen sind allerdings für die Optimierung eines Batteriezelldesigns bzw. zur Auslegung eines Zelldesigns auf diesen Lastfall von entscheidender Bedeutung.

Es sind Verfahren bekannt, bei denen um einen Indentor herum Löschpapier ausgelegt wird, um eine visuelle Auswertung des Berstverhaltens einer Batteriezelle zu erhalten.

Weiterhin beschreibt US 2012/0133521 A1 eine Batterieanordnung mit einem Fehlererkennungsmechanismus zum Erkennen und Melden von Fehlern in der Batterieanordnung.

US 2024/0021888 A1 beschreibt ein Batteriemodul, das ein Modul zum Erkennen einer Elektrolytleckage umfasst.

CN 116481728 A1 beschreibt eine Vorrichtung zum Erkennen einer Elektrolytleckage in einer Batteriezelle.

Im Rahmen der vorgestellten Erfindung werden eine Vorrichtung und ein Verfahren zum Erfassen eines Berstverhaltens einer Batteriezelle vorgestellt. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung und jeweils umgekehrt, sodass bezüglich der Offenbarung zu den einzelnen Erfindungsaspekten stets wechselseitig Bezug genommen wird bzw. werden kann.

Vor diesem Hintergrund ist es eine Aufgabe der vorgestellten Erfindung, eine Möglichkeit zum Erfassen eines Berstverhaltens einer Batteriezelle bereitzustellen.

Es wird somit gemäß einem ersten Aspekt der vorgestellten Erfindung eine Vorrichtung zum Erfassen eines Berstverhaltens einer Batteriezelle vorgestellt.

Die vorgestellte Vorrichtung umfasst einen Indentor und eine Anzahl Sensoren, wobei der Indentor eine Kontaktfläche umfasst, die dazu konfiguriert ist, die Batteriezelle in einem Kontaktbereich bis zum Bersten zu verformen, wobei die Anzahl Sensoren dazu konfiguriert ist, das Berstverhalten der Batteriezelle in dem Kontaktbereich zu erfassen.

Unter einem Indentor ist im Kontext der vorgestellten Erfindung ein Objekt zu verstehen, das dazu konfiguriert ist, eine Batteriezelle zu verformen, insbesondere in einem vorgegebenen Kontaktbereich zwischen dem Indentor und der Batteriezelle mit einer vorgegebenen Kraft zu beaufschlagen, die gemäß einem vorgegebenen Kraftfluss durch die Batteriezelle fließt.

Insbesondere dient ein Indentor zum Zerstören einer Berstscheibe der Batteriezelle, sodass Elektrolyt aus der Batteriezelle austritt. Dazu umfasst eine Kontaktfläche, die bspw. rund ist und durch die die Kraft in die Batteriezelle eingekoppelt wird.

Die vorgestellte Vorrichtung basiert auf einer Anzahl Sensoren, wie bspw. Kameras oder elektrischen Modulen, die dazu konfiguriert ist, einen Kontaktbereich, in dem eine Kontaktfläche des erfindungsgemäß vorgesehenen Indentors mit einer jeweiligen Batteriezelle in Kontakt tritt und dort stattfindende Prozess, insbesondere einen Austritt von Elektrolyt aus der Batteriezelle, zu erfassen. Entsprechend wird durch die erfindungsgemäß vorgesehenen Sensoren ein Bereich erfasst, der während eines Verformungsvorgangs der Batteriezelle durch den Indentor verdeckt und somit nicht visuell bzw. von einem Beobachter zu erkennen ist.

Anhand von durch die Anzahl Sensoren ermittelten Sensordaten kann ein Verhalten der Batteriezelle, insbesondere in dem Kontaktbereich, d.h. bspw. ein Verformungsverhalten eines Vents der Batteriezelle, beobachtet, insbesondere gemessen und ausgewertet werden.

Es kann vorgesehen sein, dass die Anzahl Sensoren eine Anzahl Kameras umfasst, die dazu konfiguriert ist, durch die Kontaktfläche hindurch den Kontaktbereich zu erfassen.

Kameras eignen sich besonders vorteilhaft zum Erfassen einer Veränderung der Batteriezelle über die Zeit. Zum Erfassen bzw. Abtasten des Kontaktbereichs können jeweilige Kameras durch den Kontaktbereich hindurch filmen.

Entsprechend kann vorgesehen sein, dass die Kontaktfläche aus einem Metall besteht und in der Kontaktfläche eine Anzahl Kanäle ausgebildet ist, die einen ersten Bereich vor der Kontaktfläche mit einem zweiten Bereich hinter der Kontaktfläche lichtleitend verbinden, und die Anzahl Kameras dazu konfiguriert ist, durch die Anzahl Kanäle hindurch den Kontaktbereich zu erfassen.

Kanäle, die sich durch die Kontaktfläche hindurch erstrecken, ermöglichen einen optischen Zugang einer Anzahl hinter der Kontaktfläche angeordneter und entsprechend durch die Kontaktfläche mechanisch geschützter Kameras zu dem Kontaktbereich, während eines Verformungsvorgangs bzw. während die Kontaktfläche in den Kontaktbereich eingebracht wird. Entsprechend kann durch die Kanäle hindurch ein Bereich vor dem Indentor erfasst werden.

Weiterhin ermöglichen derartige Kanäle eine Verwendung von Kameras zum Erfassen des Kontaktbereichs in Kombination mit einem metallischen und entsprechend undurchsichtigen Kontaktbereich, sodass ein entsprechender Indentor besonders robust und wiederverwendbar ist.

Es kann weiterhin vorgesehen sein, dass die Kontaktfläche zumindest bereichsweise transparent ist.

Eine zumindest bereichsweise transparente Kontaktfläche ermöglicht einen umfassenden Schutz jeweiliger hinter der Kontaktfläche angeordneter Kameras und einen besonders guten optischen Zugriff der Kameras auf den Kontaktbereich.

Ein transparenter Kontaktbereich kann bspw. aus einem Kunststoff, insbesondere Plexiglas, bestehen. Bspw. kann ein transparenter Kontaktbereich in einem Kanal eines metallischen Kontaktbereichs ausgebildet sein.

Es kann weiterhin vorgesehen sein, dass die Anzahl Kameras eine Stereokamera und/oder eine Wärmebildkamera umfasst.

Eine Stereokamera ermöglicht eine besonders gute räumliche Auswertung bzw. eine Distanz, um die sich der Kontaktbereich verformt, während eine Wärmebildkamera einen thermischen Fluss in dem Kontaktbereich erfasst.

Es kann weiterhin vorgesehen sein, dass die Anzahl Sensoren eine Anzahl elektrischer Sensormodule umfasst, wobei jedes elektrische Sensormodul eine Spannungsquelle und zwei Leiter umfasst und die Vorrichtung weiterhin zumindest eine Auswerteeinheit umfasst, wobei jeder Leiter der zwei Leiter mit einem elektrischen Pol der Spannungsquelle verbunden ist, wobei die zwei Leiter beabstandet voneinander durch die Kontaktfläche hindurchragen, und wobei die Auswerteeinheit dazu konfiguriert ist, einen zwischen den zwei Leitern fließenden elektrischen Strom zu erfassen.

Mittels elektrischer Module kann eine elektrische Veränderung des Kontaktbereichs, insbesondere ein Austritt von Elektrolyt aus der Batteriezelle, erfasst werden. Dazu liegen die beiden Leiter beabstandet voneinander auf der Kontaktfläche des Indentors, sodass die beiden Leiter bspw. durch Luft voneinander elektrisch isoliert sind. Entsprechend bewirkt ein Austritt von Elektrolyt aus der Batteriezelle in einen Zwischenraum zwischen den beiden Leitern eine elektrische Kopplung der beiden Leiter, sodass ein Stromkreis entsteht, der durch die Auswerteeinheit gemessen werden kann.

Es kann weiterhin vorgesehen sein, dass die zwei Leiter über eine dielektrische Schicht verbunden sind, wobei sich ein elektrischer Widerstand der dielektrischen Schicht in einem ersten Zustand, in dem die dielektrische Schicht nicht mit Elektrolyt in Kontakt ist, von einem elektrischen Widerstand der dielektrischen Schicht in einem zweiten Zustand, in dem die dielektrische Schicht in Kontakt mit Elektrolyt ist, unterscheidet.

Durch Verwendung einer dielektrischen Schicht können bereits geringe Mengen an Elektrolyt zum Schließen eines Stromkreises zwischen den beiden Leitern eines jeweiligen elektrischen Moduls führen, sodass bereits ein geringer Austritt an Elektrolyt durch das elektrische Modul erfasst werden kann.

Es kann weiterhin vorgesehen sein, dass die Vorrichtung einen Aktor umfasst, der dazu konfiguriert ist, die Kontaktfläche gegen eine Batteriezelle zu drücken.

Ein Aktor, wie bspw. ein Motor, insbesondere ein elektrischer Schrittmotor oder ein Elektromagnet, stellt eine Kraft bereit, um den Indentor zu bewegen und entsprechend durch die Batteriezelle zu verformen.

Es kann weiterhin vorgesehen sein, dass die Vorrichtung eine Recheneinheit umfasst, die dazu konfiguriert ist, durch die Anzahl Sensoren ermittelte Sensordaten zu speichern und/oder auf einer Ausgabeeinheit auszugeben.

Unter einer Recheneinheit ist im Kontext der vorgestellten Erfindung ein Computer, ein Prozessor, ein Steuergerät oder jeder weitere programmierbare Schaltkreis zu verstehen.

Durch eine Recheneinheit können jeweilige Sensordaten gespeichert und auf einer Ausgabeeinheit, wie bspw. einer Anzeige, ausgegeben, insbesondere in einem Diagramm bzw. einer Reihe von Diagrammen dargestellt werden.

Gemäß einem zweiten Aspekt betrifft die vorgestellte Erfindung ein Verfahren zum Erfassen eines Berstverhaltens einer Batteriezelle.

Das vorgestellte Verfahren umfasst das Bereitstellen einer möglichen Ausgestaltung der vorgestellten Vorrichtung und das Drücken des Indentors auf die Batteriezelle, bis zum Bersten der Batteriezelle.

Insbesondere kann durch das vorgestellte Verfahren ein Batteriezelldeformationstest durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine erste mögliche Ausgestaltung der vorgestellten Vorrichtung,
- Fig. 2: eine zweite mögliche Ausgestaltung der vorgestellten Vorrichtung,
- Fig. 3: eine dritte mögliche Ausgestaltung der vorgestellten Vorrichtung,
- Fig. 4: eine Detaildarstellung eines Sensors der Vorrichtung gemäß Fig. 3,
- Fig. 5: eine mögliche Ausgestaltung des vorgestellten Verfahrens.

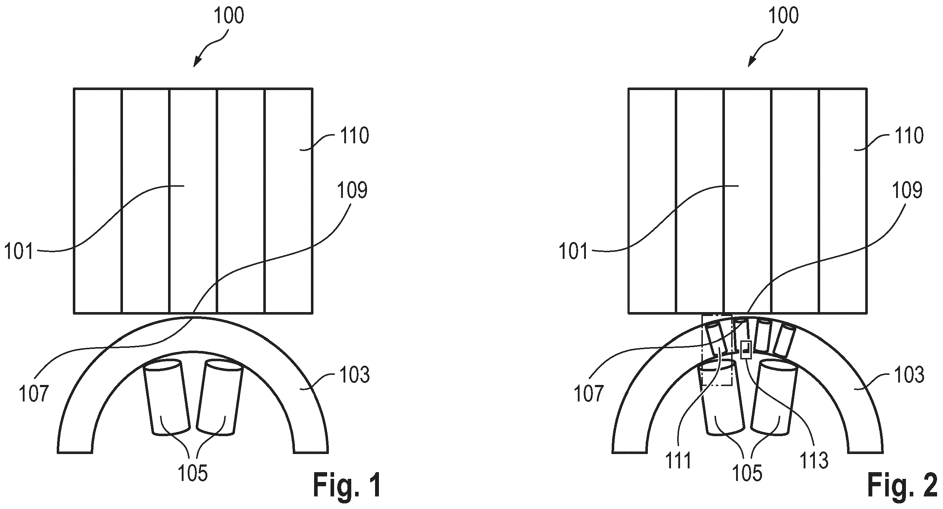

In Fig. 1 ist eine Vorrichtung 100 zum Erfassen eines Berstverhaltens einer Batteriezelle 101 einer Batteriezellanordnung 110 dargestellt.

Die Vorrichtung 100 umfasst einen Indentor 103 und Sensoren 105, die hier beispielhaft als Kameras ausgestaltet sind.

Der Indentor 103 umfasst eine Kontaktfläche 107, die dazu konfiguriert ist, die Batteriezelle 101 in einem Kontaktbereich 109 bis zum Bersten zu verformen.

Die Sensoren 105 sind dazu konfiguriert, das Berstverhalten der Batteriezelle 101 in dem Kontaktbereich 109 zu erfassen. Dazu ist die Kontaktfläche 107 vorliegend beispielhaft transparent ausgestaltet und bspw. aus einem Kunststoff gefertigt.

In Fig. 2 ist die Kontaktfläche 107 aus einem Metall, wie bspw. Stahl, gefertigt und entsprechend undurchsichtig. Um den Kontaktbereich 109 durch die Sensoren 105 erfassen zu können, sind in die Kontaktfläche 107 Kanäle 111 eingebracht, durch die hindurch die Sensoren 105 filmen bzw. sensieren können. Optional sind Leuchtquellen 113 vorgesehen, um die Kanäle 111 auszuleuchten und den Kontaktbereich 109 zu beleuchten.

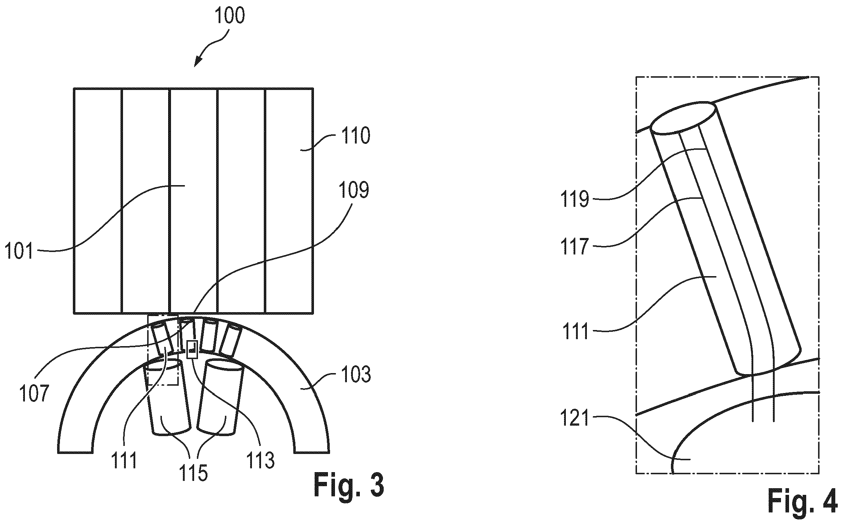

In Fig. 3 sind die Sensoren 105 als elektrische Sensormodule 115 ausgestaltet, die jeweils eine Spannungsquelle 121 und zwei elektrische Leiter 117, 119 umfassen.

Die elektrischen Leiter 117,119 liegen, wie in Fig. 4 im Detail dargestellt, voneinander beabstandet in einem Kanal 111 vor und ragen durch die Kontaktfläche 107 durch, sodass ein aus der Batteriezelle 101 austretender und die beiden elektrischen Leiter 117, 119 elektrisch koppelnder Elektrolyt einen Stromkreis zwischen den beiden Leitern 117, 119 schließt. Entsprechend kann an dem Stromkreis ein Strom gemessen werden, der sich relativ zum Ausströmen von Elektrolyt aus der Batteriezelle 101 verhält.

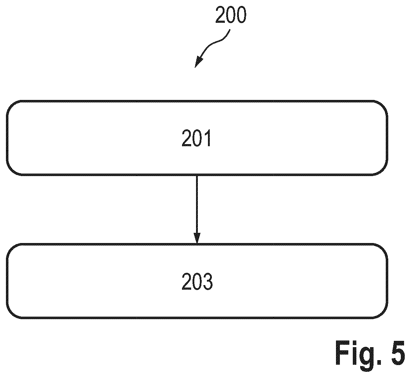

In Fig. 5 ist ein Verfahren 200 zum Erfassen eines Berstverhaltens einer Batteriezelle 101 dargestellt.

Das Verfahren 200 umfasst einen Bereitstellungsschritt 201, bei dem eine Vorrichtung 100 nach einer der Figuren 1 bis 3 bereitgestellt wird, und einen Berstschritt 203, bei dem der Indentor 103 bis zum Bersten der Batteriezelle 101 auf die Batteriezelle 101 gedrückt wird.

### Bezugszeichenliste

- 100: Vorrichtung
- 101: Batteriezelle
- 103: Indentor
- 105: Sensor
- 107: Kontaktfläche
- 109: Kontaktbereich
- 110: Batteriezellanordnung
- 111: Kanal
- 113: Leuchtquelle
- 115: Sensormodul
- 117: Leiter
- 119: Leiter
- 121: Spannungsquelle
- 200: Verfahren
- 201: Bereitstellungsschritt
- 203: Berstschritt

## Patentansprüche

1. Vorrichtung (100) zum Erfassen eines Berstverhaltens einer Batteriezelle (101), wobei die Vorrichtung (100) umfasst:
- einen Indentor (103),
- eine Anzahl Sensoren (105),
wobei der Indentor (103) eine Kontaktfläche (107) umfasst, die dazu konfiguriert ist, die Batteriezelle (101) in einem Kontaktbereich (109) bis zum Bersten zu verformen, wobei die Anzahl Sensoren (105) dazu konfiguriert ist, das Berstverhalten der Batteriezelle (101) in dem Kontaktbereich (109) zu erfassen.

2. Vorrichtung (100) nach Anspruch 1,
**dadurch gekennzeichnet,**
**dass** die Anzahl Sensoren (105) eine Anzahl Kameras umfasst, die dazu konfiguriert ist, durch die Kontaktfläche (107) hindurch den Kontaktbereich (109) zu erfassen.

3. Vorrichtung (100) nach Anspruch 2,
**dadurch gekennzeichnet,**
**dass** die Kontaktfläche (107) aus einem Metall besteht und in der Kontaktfläche (107) eine Anzahl Kanäle (111) ausgebildet ist, die einen ersten Bereich vor der Kontaktfläche (107) mit einem zweiten Bereich hinter der Kontaktfläche (107) lichtleitend verbinden, und
die Anzahl Kameras dazu konfiguriert ist, durch die Anzahl Kanäle (111) hindurch den Kontaktbereich (109) zu erfassen.

4. Vorrichtung (100) nach Anspruch 2 oder 3,
**dadurch gekennzeichnet,**
**dass** die Kontaktfläche (107) zumindest bereichsweise transparent ist.

5. Vorrichtung (100) nach einem der Ansprüche 2 bis 4,
**dadurch gekennzeichnet,**
**dass** die Anzahl Kameras eine Stereokamera und/oder eine Wärmebildkamera umfasst.

6. Vorrichtung (100) nach einem der voranstehenden Ansprüche,
**dadurch gekennzeichnet,**
**dass** die Anzahl Sensoren (105) eine Anzahl elektrischer Sensormodule (115) umfasst,
wobei jedes elektrische Sensormodul (115) umfasst:
- eine Spannungsquelle (121) und
- zwei Leiter (117, 119),
wobei die Vorrichtung (100) zumindest eine Auswerteeinheit umfasst,
wobei jeder Leiter (117, 119) der zwei Leiter (117, 119) mit einem elektrischen Pol der Spannungsquelle (121) verbunden ist,
wobei die zwei Leiter (117, 119) beabstandet voneinander durch die Kontaktfläche (107) hindurchragen, und wobei die Auswerteeinheit dazu konfiguriert ist, einen zwischen den zwei Leitern (117, 119) fließenden elektrischen Strom zu erfassen.

7. Vorrichtung (100) nach Anspruch 6,
**dadurch gekennzeichnet,**
**dass** die zwei Leiter (117, 119) über eine dielektrische Schicht verbunden sind, wobei sich ein elektrischer Widerstand der dielektrischen Schicht in einem ersten Zustand, in dem die dielektrische Schicht nicht mit Elektrolyt in Kontakt ist, von einem elektrischen Widerstand der dielektrischen Schicht in einem zweiten Zustand, in dem die dielektrische Schicht in Kontakt mit Elektrolyt ist, unterscheidet.

8. Vorrichtung (100) nach einem der voranstehenden Ansprüche,
**dadurch gekennzeichnet,**
**dass** die Vorrichtung (100) einen Aktor umfasst, der dazu konfiguriert ist, die Kontaktfläche (107) gegen eine Batteriezelle (101) zu drücken.

9. Vorrichtung (100) nach einem der voranstehenden Ansprüche,
**dadurch gekennzeichnet,**
**dass** die Vorrichtung (100) eine Recheneinheit umfasst, die dazu konfiguriert ist, durch die Anzahl Sensoren (105) ermittelte Sensordaten zu speichern und/oder auf einer Ausgabeeinheit auszugeben.

10. Verfahren (200) zum Erfassen eines Berstverhaltens einer Batteriezelle (101), wobei das Verfahren (200) umfasst:
- Bereitstellen (201) einer Vorrichtung (100) nach einem der Ansprüche 1 bis 9,
- Drücken (203) des Indentors (103) auf die Batteriezelle (101), bis zum Bersten der Batteriezelle (101).
